# EUROPEAN PATENT APPLICATION

(11) **EP 4 112 968 A1**
(43) Date of publication of application: **04.01.2023**
(21) Application number: 21182149.1
(22) Date of filing: 28.06.2021
(51) Int. Cl.: F16F 7/10, F16F 9/12, F03D 1/06

(54) **DYNAMIC VIBRATION ABSORBER**

(71) Applicant: Siemens Gamesa Renewable Energy A/S, 7330 Brande (DK)
(72) Inventor: Frankel, Jamie, Boulder, 80304 (US); Pant, Mayank, Boulder, 80302 (US); Ramadugu, Abhinaya, Boulder, 80302 (US); Weatherbee, Ryan, Boulder, 80304 (US); Couturier, Philippe, Lafayette, 80026 (US); Molitor, David, Boulder, 80301 (US)
(74) Representative: SGRE-Association

(57) **Abstract**

The invention describes a dynamic vibration absorber (1) comprising a frame (10) configured for mounting to a moveable structure (20); a flywheel (11) mounted on a first shaft (110); a first translation means (T1) adapted to convert a linear displacement (D) of the frame (10) into rotation of the first shaft (110); characterized by a rotary damper (12) mounted on a second shaft (120); and a second translation means (T2) adapted to convert a rotational velocity of the first shaft (110) into a rotational velocity of the second shaft (120).

## Description

### Background

A rotor blade is subject to loading during operation and must be constructed to withstand the maximum loads that may arise. In the case of a wind turbine rotor blade, design parameters must also aim to mitigate the effects of flap-wise and edge-wise bending, because the resulting stresses can lead to a significantly shortened lifetime.

The design of a long wind turbine rotor blade is generally developed with the aid of a technique such as aeroelastic modelling in order to establish a form or shape that will have enough aerodynamic system damping in critical modes. One approach is to give the unloaded rotor blade a pronounced upwind curvature in order to introduce aerodynamic damping in otherwise low-damped modes. This approach however has its limits due to manufacturing and transportation constraints. Another mitigation strategy for low damped modes includes operational curtailment of rotor speed. This approach limits the power generation capabilities of a turbine.

In another approach, a damper can be installed in the interior of the rotor blade with the purpose of suppressing edge-wise and/or flap-wise oscillations. Such a damper can be passive, i.e. it does not require any external power source. However, the known types of dynamic damper are generally so large and/or heavy that these can only be installed in a sufficiently capacious region of the rotor blade, usually in an inboard location where the airfoil has a high absolute thickness and sufficient interior space to accommodate a dynamic damper. Therefore, an inherent drawback of these dampers is that they cannot be placed in the thinner and more critical outboard region of a rotor blade and are therefore unable to effectively suppress oscillations.

It is therefore an object of the invention to provide a solution to the problems outlined above.

This object is achieved by the claimed dynamic vibration absorber and by the claimed rotor blade.

### Description

According to the invention, the dynamic vibration absorber (DVA) comprises a frame configured for mounting to a moveable structure; a flywheel mounted on a first rotating shaft; a first translation means adapted to convert a linear displacement of the frame into rotation of the first shaft. The dynamic vibration absorber is characterized by a rotary damper mounted on a second shaft, and a second translation means adapted to convert a rotational velocity of the first shaft into a rotational velocity of the second shaft.

The inventive dynamic vibration absorber is based on a structure that converts a linear displacement of the frame into rotation of a flywheel. For example, the flywheel can be arranged in a carriage that is free to move along linear guides of the frame, so that whenever the frame is displaced (by a movement of the structure to which it is mounted, e.g. a wind turbine rotor blade), the inertia of the carriage results in its displacement relative to the frame, which in turn results in a rotation of the first shaft. In this way, kinetic energy of the frame's motion results in linear displacement of the carriage and in rotational displacement of the flywheel. This structure already serves to store kinetic energy, and its damping capacity is determined primarily by the flywheel inertia and the linear range of the first translation means.

The inventive DVA is optimized by the additional rotary damper and the second translation means that converts the rotation of the first shaft into rotation of the second shaft. An advantage of the inventive dynamic vibration absorber is its increased damping capacity compared to the damping capacity of a similarly sized prior art damper which relies on a single flywheel mounted on a primary shaft. The inventive DVA is a passive device that does not need any electrical power or control input, and requires little or no maintenance. The inventive DVA is particularly suited for use in cantilevered wind turbine rotor blades, since design constraints place limits on the mass and dimensions of a damper installed in the rotor blade interior, but of course the compact and lightweight inventive damper can be used to augment damping in any underdamped aeroelastic or structural mode.

A wind turbine rotor blade generally comprises a root portion for mounting to a hub and an airfoil portion that is shaped to convert kinetic energy of the wind into rotation of the aerodynamic rotor, which in turn drives a generator. A wind turbine usually comprises three such rotor blades, although other designs are possible.

According to the invention, the wind turbine rotor blade is equipped with at least one instance of the inventive dynamic vibration absorber, which can be mounted to the rotor blade at a suitable position, for example in the interior of the rotor blade.

Particularly advantageous embodiments and features of the invention are given by the dependent claims, as revealed in the following description. Features of different claim categories may be combined as appropriate to give further embodiments not described herein.

The expressions "dynamic vibration absorber", "DVA" and "damper" may be used interchangeably herein and refer to the overall structure, i.e. frame, flywheel, dashpot and both translation means. A flywheel or dashpot may be individually regarded as a damper, but for clarity, the term "damper" is used in the following to refer to the overall device. While the invention is described in the context of application in a wind turbine rotor blade, it shall be understood that the inventive DVA can be used in any kind of equipment that benefits from vibration damping.

The first translation means is preferably realised as a linear actuator, for example a wheel rotating on a smooth straight or curved surface. In a particularly preferred embodiment of the invention, the first translation means is a rack and pinion assembly, comprising a linear gear mounted to the frame and a pinion arranged about the first shaft. Preferably, the linear gear is arranged to lie predominantly in the direction of linear displacement of the frame. For example, if an embodiment of the inventive DVA is to suppress edge-wise oscillations in a wind turbine rotor blade, the DVA will be arranged in the rotor blade so that the linear gear is oriented in a direction parallel to the chord at that part of the rotor blade. For such an application, the frame is therefore constructed to accommodate such an arrangement of the linear gear.

The second translation means can be realised in any suitable manner, for example a belt and pulley system, a chain and sprocket system, planetary gear system, etc. In a particularly preferred embodiment of the invention, the second translation means comprises an arrangement of intermeshing circular gears, with a first circular gear mounted on the first shaft and a second circular gear mounted on the second shaft. With this arrangement, a rotation of the first shaft causes the second shaft also to rotate. The angular velocity of the second shaft can be determined by a suitable gear ratio. In a preferred embodiment of the invention, the gear ratio is chosen to result in a higher rotational speed of the second shaft, i.e. the chosen gear ratio is greater than 1:1. The advantage of a larger gear ratio is to allow for a smaller rotary damper.

In a further preferred embodiment of the invention, the second translation means is realised in the interior of the rotary damper. In such an embodiment, there is no need for a shaft structure extending between the second translation means and the dashpot. For example, the dashpot can be constructed to incorporate an internal gearset. Alternatively, the dashpot can be connected directly to the higher-rpm side of the transmission system.

In a preferred embodiment of the invention, the rotary damper is realised as a continuous rotation dashpot. Alternatively, the rotary damper can be realised as a vane dashpot or an electromagnetic rotary damper.

The rotor blade according to the invention can be equipped with any number of DVAs as described above. In this way, the rotor blade can be constructed to oscillations caused by different modes, for example edge-wise oscillations caused by vortex induced vibrations, flap-wise oscillations arising from instabilities such as classical flutter. This type of flutter is particularly relevant in the case of a long and relatively flexible wind turbine rotor blade, for which the first torsion mode couples to a low flap-wise or edge-wise mode.

In a preferred embodiment of the invention, the rotor blade is equipped with at least one embodiment of the inventive DVA, arranged such that its direction of linear displacement is essentially perpendicular to the chord plane. A damper arranged in this manner may be referred to as a "flap-wise DVA" in the following. Preferably, a flap-wise DVA is constructed to achieve resonance with a flap-wise oscillation mode, i.e. linear displacement of the first shaft will be at a similar rate or frequency as the expected flap-wise oscillations for that rotor blade.

Preferably, the inventive DVA is constructed so that the combined mass of the carriage and flywheel achieves resonance with the blade mode of interest in order to maximize the achievable damping. For example, a flap-wise dynamic vibration absorber may be configured to suppress flap-wise oscillations with a frequency in the order of 0.5 Hz - 5 Hz. To this end, the rotary damper of the flap-wise dynamic vibration absorber is constructed to have a suitable mass and a suitable damping coefficient.

The total damping of a system or subcomponent is a measure of its rate of energy dissipation, and can be expressed as a percentage of critical damping or logarithmic decrement. A larger logarithmic decrement means that low oscillation amplitudes can be achieved under an oscillating load such as vortex-induced vibrations. The inventive damper can target a single frequency for which one or more aeroelastic modes may exist. When tuned to a specific frequency, the inventive damper can achieve a large logarithmic decrement of an associated mode, for example a decrement of 10% or more.

In a further preferred embodiment of the invention, the rotor blade is equipped with at least one embodiment of the inventive DVA, mounted such that its direction of linear displacement is essentially parallel to the airfoil chord of the rotor blade at that mounting position. A damper arranged in this manner may be referred to as an "edge-wise DVA" in the following. Preferably, an edge-wise DVA is constructed to achieve resonance with an edge-wise oscillation mode, i.e. linear displacement of the first shaft will be at the same rate or frequency as the expected edge-wise oscillations for that rotor blade. Such an edge-wise dynamic vibration absorber may be configured to suppress edge-wise oscillations with a frequency in the order of 0.5 Hz - 5 Hz.

An instance of the inventive dynamic vibration absorber can be installed at any suitable distance outward from the hub. For example, a DVA for suppression of flap-wise oscillations may be installed at 60% of the rotor blade length (distance being measured from the root end mounted to the hub, so that 100% corresponds to the tip of the rotor blade), whereas a DVA for suppression of edge-wise oscillations may be installed at 60% of the rotor blade length. Of course, any number or combination of DVAs may be used, for example two DVAs for suppression of edge-wise oscillations, installed at 60% and 80% of the rotor blade length.

The favourably high damping coefficient in combination with the favourably low mass have various advantages over an equivalent rotor blade (a rotor blade having the same length and/or being equipped with a prior art damper): rotor blade design can be simplified since the quantity of reinforcement can be reduced; the overall mass of the rotor blade can be lower; the smaller size of the damper also means it can easily be placed further outboard inside the restricted available space near the rotor blade tip; the permissible rotational speed can be greater, etc.

A rotor blade is generally equipped with various sensors such as load sensors and accelerometers. The performance of the inventive DVAs can be improved by measuring the frequency and amplitude of actual oscillations of a rotor blade and determining the effectiveness of the damper(s). The extent of damping can be tuned as required by adjusting the mass, stiffness, and damping of the rotary damper, for example during a scheduled rotor blade maintenance procedure.

Equally, an already installed rotor blade can be upgraded by equipping it with one or more instances of the inventive DVA at suitable positions inside the rotor blade. In this way, it is possible to extend the lifetime of installed rotor blades of a wind turbine, and to increase its power output since the wind turbine can then continue operation in high wind conditions that would otherwise require reduction in rotor speed or even shutdown to avoid structural damage or excess stress on the rotor blades.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive damper;
Figure 2 shows an exploded view of the damper of Figure 1;
Figures 3 and 4 show a wind turbine with rotor blades equipped with the inventive damper;
Figure 5 illustrates an advantage of the inventive damper;
Figure 6 shows a prior art damper.

In the diagrams, like numbers refer to like objects throughout. Objects in the diagrams are not necessarily drawn to scale.

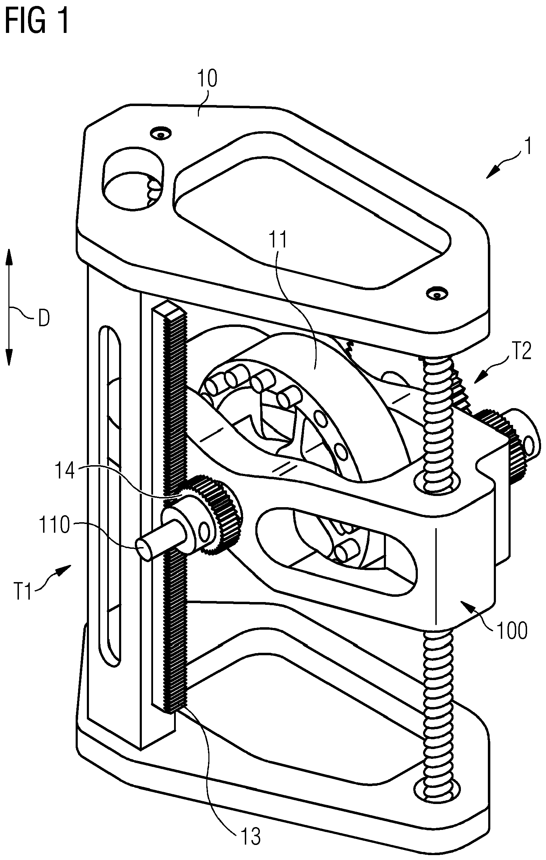

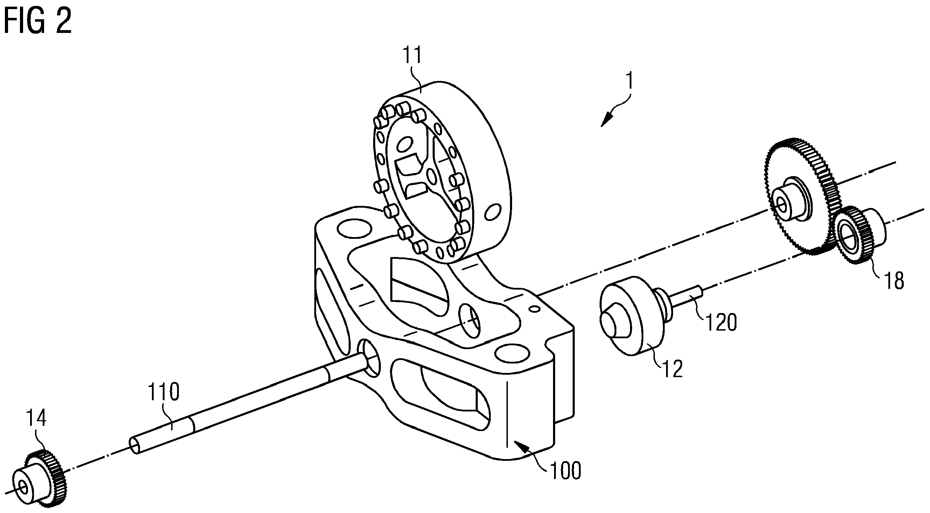

Figure 1 and Figure 2 show an embodiment of the inventive damper 1. The damper 1 comprises a frame 10 for mounting to a structure that requires damping. A carriage 100 encloses a flywheel 11. The flywheel 11 is mounted on an axle or shaft 110, which terminates at one end in a pinion 14 of a first transmission system T1. The pinion 14 can travel along a rack or linear gear 13 arranged along one planar surface of the frame 10. When the damper 1 is displaced up or down as indicated by the double-ended arrow on the left-hand side, this first transmission system T1 converts a linear displacement of the first shaft 110 into rotation of the flywheel 11. The carriage 100 with the first shaft 110 and flywheel 11 can move back and forth in the direction D shown.

The other end of the primary shaft 110 drives a second transmission system T2 comprising intermeshed gears 17, 18 as illustrated in Figure 2. The first gear 17 is turned by the first shaft 110 (turned by the rack and pinion 14), and the second gear 18 turns a second shaft 120 which in turn causes a rotary damper 12 to rotate. In this exemplary embodiment, the gear ratio of the second transmission system T2 is in the order of 3:1, so that the second shaft 120 turns at about three times the rate of the first shaft 110. Here, the rotary damper 12 can be a continuous rotation dashpot or similar. In this embodiment, the secondary shaft is essentially parallel to the primary shaft, but it shall be understood that the transmission shafts can have any suitable orientation (parallel, orthogonal) with respect to the frame and to each other.

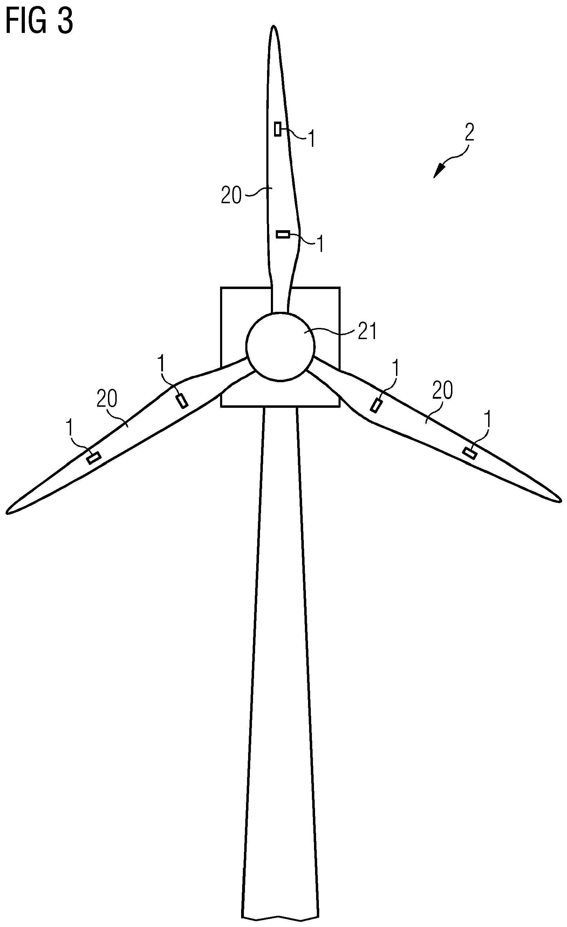

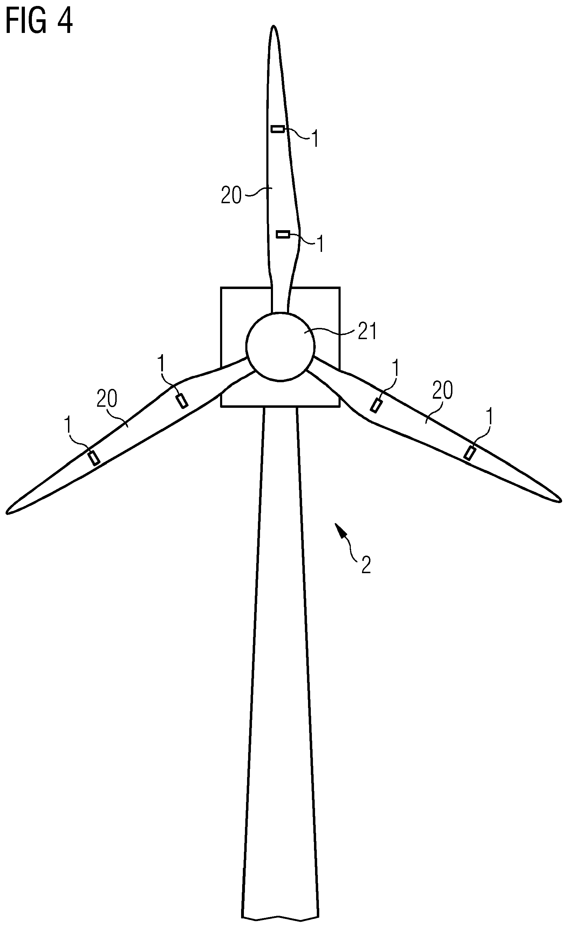

Figures 3 and 4 show a wind turbine 2 with rotor blades 20 equipped with various instances of the inventive damper 1. The diagrams indicated possible positions of the damper 1 in the interior of the rotor blades 20. In Figure 3, each rotor blade 20 has a flap-wise DVA 1 installed in an outboard region as shown to suppress flap-wise vibrations, as well as an edge-wise DVA 1 installed further inboard as shown to suppress edge-wise vibrations. Each edge-wise damper 1 is mounted so that the linear gear 13 of its first transmission system T1 is essentially parallel to the chord line of the airfoil at the mounting position. Each flap-wise damper 1 is mounted so that the linear gear 13 of its first transmission system T1 is essentially perpendicular to the chord plane at the mounting position. In Figure 4, each rotor blade 20 has two edge-wise DVAs 1 installed as shown to suppress edge-wise vibrations. Of course, these embodiments are merely exemplary, and the skilled person will understand that any suitable number of dampers 1 can be chosen to suppress edge-wise and/or flap-wise oscillations. The number of dampers 1 and the configuration of the damper(s) 1 can be chosen on the basis of rotor blade parameters such as length, mass etc., and also under consideration of the wind parameters relevant to that wind turbine.

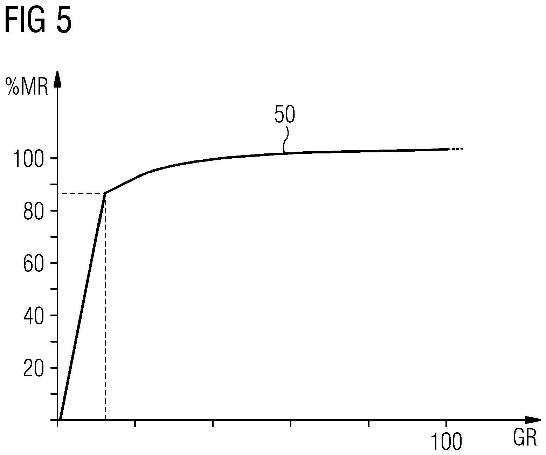

Figure 5 illustrates the concept underlying the inventive DVA. The curve 50 shows the relationship between percentage mass reduction MR of the dashpot (Y-axis) against gear ratio GR of the second translation means 12 (dimensionless, X-axis). In the diagram, a gear ratio of 1:1 represents the mass of a comparable prior art damper that would comprise a dashpot mounted on a primary shaft, without any further damping means. The curve 50 corresponds to a constant damping level, i.e. the damping is the same at any point along the curve. Of course, there can be multiple such curves for multiple damping levels. For a particular wind turbine rotor blade, the geometry and mass of the rotor blade will allow the designer to compute the necessary level of damping required in order to suppress classical flutter, for example, and the designer can also determine the desired position along the rotor blade length for an intended DVA.

The diagram shows that, for a standard gear train with a gear ratio in the order of 10:1, the mass of the dashpot in an embodiment of the inventive DVA can be very favourably reduced by up to 90% compared to the mass of a comparable damping element in a prior art DVA. An even higher gear ratio (and a correspondingly lower dashpot mass) may be achieved with an alternative translation means such as a planetary gearset (at the expense of increased complexity).

With one or more embodiments of such a customized compact and lightweight damper, a wind turbine rotor blade can achieve a higher "flutter speed", i.e. the rotational velocity at which the aeroelastic rotor system becomes unstable. The aerodynamic rotor must not turn faster than this speed when the rotor blades experience edge-wise vibration, otherwise damage to the rotor blades may result. Thus, increasing flutter speed allows for a greater operational range of the rotor.

In the case of the prior art rotor blade, e.g. a rotor blade equipped with a prior art passive damper or without any kind of passive damper, the edge-wise oscillations of the rotor blade must be reduced by lowering the rotor speed. Here, the "flutter speed" is lower than for the rotor blades equipped with the inventive damper. The lower flutter speed leads to reduced output power and reduced earnings.

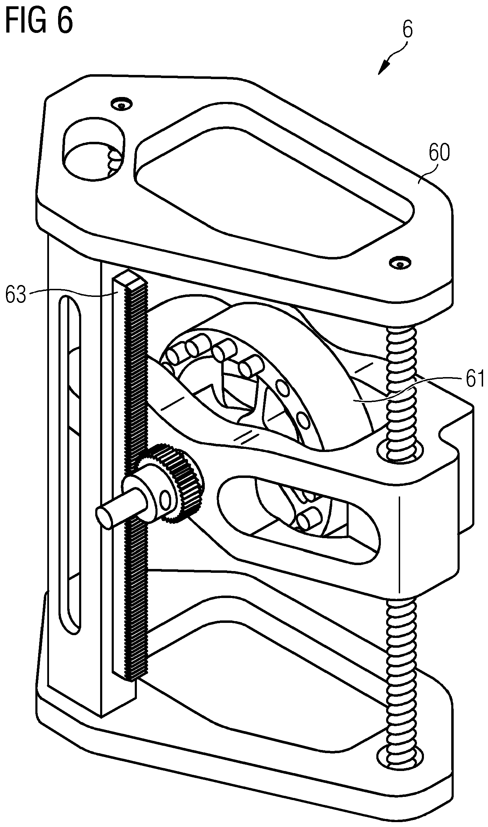

Figure 6 shows a prior art DVA 6. Here also, the basic structure comprises a frame 60, a single damping element - in this case a flywheel 61 - mounted on a shaft 610, which terminates at one end in a pinion 64 of a transmission system. The pinion 64 travels along a linear gear 63 arranged along a planar surface of the frame 60. The transmission system converts a displacement of the frame 60 (and therefore the shaft 610) into rotation of the flywheel 61. To achieve the damping effect of the inventive DVA shown in Figures 1 and 2 above, the prior art DVA 6 must be larger overall to accommodate a significantly more massive flywheel. However, as explained with Figure 5 above, the increased mass and dimensions add to the overall weight of the rotor blade and also prohibit installation of the prior art damper in the flatter and more confined airfoil in the outboard region of the rotor blade.

Although the present invention has been disclosed in the form of preferred embodiments and variations thereon, it will be understood that numerous additional modifications and variations could be made thereto without departing from the scope of the invention. For example, instead of arranging the inventive DVA inside the rotor blade as described above, an embodiment of the inventive DVA may be only partially enclosed by the rotor blade, or may even be mounted at the exterior of the rotor blade. Furthermore, the number of transmission shafts is not limited to two, and in a further embodiment, the dashpot could be arranged on a tertiary shaft structure.

For the sake of clarity, it is to be understood that the use of "a" or "an" throughout this application does not exclude a plurality, and "comprising" does not exclude other steps or elements.

## Claims

1. A dynamic vibration absorber (1) comprising
- a frame (10) configured for mounting to a moveable structure (20);
- a flywheel (11) mounted on a first shaft (110);
- a first translation means (T1) adapted to convert a linear displacement (D₁₁₀) of the frame (10) into rotation of the first shaft (110);
**characterized by**
- a rotary damper (12) mounted on a second shaft (120); and
- a second translation means (T2) adapted to convert a rotational velocity of the first shaft (110) into a rotational velocity of the second shaft (120).

2. A dynamic vibration absorber according to claim 1, wherein the first translation means (T1) comprises a rack and pinion assembly (13, 14), comprising a linear gear (13) mounted to the frame (10) and a pinion (14) arranged about the first shaft (110).

3. A dynamic vibration absorber according to claim 2, wherein the linear gear (13) is arranged essentially in the direction of linear displacement of the frame (10).

4. A dynamic vibration absorber according to any of the preceding claims, wherein the second translation means (T2) comprises an arrangement of intermeshing circular gears (17, 18), with a first circular gear (17) mounted on the first shaft (110) and a second circular gear (18) mounted on the second shaft (120).

5. A dynamic vibration absorber according to claim 4, wherein the gear ratio of the second translation means (T2) results in conversion of the rotational speed of the first shaft (110) into a higher rotational speed of the second shaft (120) .

6. A dynamic vibration absorber according to any of the preceding claims, wherein the rotary damper (12) is realised as a continuous rotation dashpot.

7. A dynamic vibration absorber according to any of the preceding claims, wherein the second translation means (T2) is realised in the interior of the rotary damper (12).

8. A wind turbine rotor blade (20) comprising
- a root portion for mounting to the hub (21) of a wind turbine (2);
- an airfoil portion; and
- at least one dynamic vibration absorber (1) according to any of claims 1 to 6 mounted to the rotor blade (20).

9. A wind turbine rotor blade according to claim 8, comprising a dynamic vibration absorber (1) installed at a distance of at least 85% of the rotor blade length, more preferably at a distance of at least 90% of the rotor blade length.

10. A wind turbine rotor blade according to claim 8 or claim 9, comprising a flap-wise dynamic vibration absorber (1) arranged such that the direction of linear displacement (D) of the frame (10) is essentially perpendicular to the chord plane of the rotor blade (20).

11. A wind turbine rotor blade according to claim 10, wherein a flap-wise dynamic vibration absorber (1) is configured to suppress flap-wise oscillations with a frequency in the order of 0.5 - 5 Hz.

12. A wind turbine rotor blade according to any of claims 8 to 11, comprising an edge-wise dynamic vibration absorber (1) arranged such that the direction of linear displacement (D) of the frame (10) is essentially parallel to an airfoil chord line of the rotor blade (20).

13. A wind turbine rotor blade according to claim 12, wherein an edge-wise dynamic vibration absorber (1) is configured to suppress edge-wise oscillations with a frequency in the order of 0.5 - 5 Hz.

14. A wind turbine (2) comprising a number of rotor blades (20) according to any of claims 8 to 13.
